Europäisches Patentamt

European Patent Office

Office européen des brevets

(19)

(11) Publication number: **0 051 043**
**B1**

(12) **EUROPEAN PATENT SPECIFICATION**

(45) Date of publication of patent specification: **25.07.84**

(21) Application number: **81810398.8**

(22) Date of filing: **01.10.81**

(51) Int. Cl.³: **E 03 D 1/32, E 03 D 9/14,
F 16 K 31/26, F 16 K 47/02**

(54) Valve unit for water closets.

(30) Priority: **24.10.80 CH 7921/80**

(43) Date of publication of application:
**05.05.82 Bulletin 82/18**

(45) Publication of the grant of the patent:
**25.07.84 Bulletin 84/30**

(84) Designated Contracting States:
**AT BE DE FR GB IT LU NL SE**

(56) References cited:
**CH - A - 408 804
DE - A - 1 650 589
DE - B - 1 024 896
DE - C - 88 838
FR - A - 1 063 687
FR - A - 1 557 863
GB - A - 1 164 358
GB - A - 1 331 467**

(73) Proprietor: **Brevind Etablissement
FL-9494 Schaan (LI)**

(72) Inventor: **Basler, Bruno
Piazza Molino Nuovo 15
CH-6900 Lugano (CH)**

(74) Representative: **Baggiolini, Raimondo et al,
Racheli & Fiammenghi Via San Gottardo 15
CH-6900 Lugano (CH)**

## Description

This invention relates to a valve unit for water closets and other installations, which comprises a valve including a member which closes a bore in a valve seat to close the valve and prevent flow of water therethrough and is openable by a float control to allow flow of water through the valve, said valve member having an area which is subjected to the pressure of the supply water urging the valve member to the closed position larger than the area of the bore through which the water flows when the valve is open, so that any increase in pressure in the supply water results an increase in the pressure closing or tending to close the valve, said unit including a pivot arm from which is suspended the float.

From French patents No. 1.557.863 and No. 1.063.687 as well as from the German patent No. 88.838 there are known float operated valve units for water closets and other applications comprising a valve member which closes a bore in a valve seat and has an area subjected to the supply pressure which is larger than the area of the bore through which the water flows when the valve is open.

This known arrangements are not efficient in regions in which the supply pressure of the water is very different from a locality to another i.e. at the top and at the bottom of a hill or mountain.

The present invention avoids this drawback and allows adjustment of the valve unit during the installation to the the mean value between the higher and the lower pressure of the supply water in the locality in which the unit is installed.

The valve unit according to the present invention is characterized in that said pivot arm has a weight slidably mounted thereon so that the moment tending to open the valve, can be varied and adjusted during the installation of the unit, to the mean value between the higher and the lower pressure of the supply water in the locality in which the unit is installed, said float being provided with a float casing having a float valve at the base of the casing which closes with the rise in water level preventing any flow of water into the float casing until the water level reaches the top edge of the casing, so that the filling of the casing causes lifting of the float and the arm closing the valve.

An embodiment of the invention will now be described, by way of example, with reference to the accompanying drawings, wherein:

Fig. 1 is a sectional elevation of a WC cistern tank, including a valve unit of the present invention; and

Fig. 2 is a sectional elevation to an enlarged scale, and showing the valve of the valve unit in detail.

Referring to the drawings, reference numeral 1 indicates a connection to which a supply water line is coupled, and reference 2 is a coupling collar. The cistern tank is indicated by reference numeral 3, and a short pipe 4 couples the inlet connection 1 to a collar 5 of a housing 20 containing the valve of the valve unit. Reference 6 indicates a sealing washer which ensures the water tight connection of the pipe 4 to the collar 5.

Inside the housing 20 is a valve body 14 which is coupled to collar 5 by means of a collar 7 and O-ring seal 8, the seal 8 ensuring the water tight connection of the body 14 and collar 7. Inside the body 14 is a sleeve body 10A having apertures 10 therein, through which water flowing into the valve body 14 passes. The sleeve body 10 houses in a cylinder recess, the large diameter end portion 29A of a valve member in the form of a valve spool rod 29. The end face 29' of portion 29A receives the full pressure of the supply water which passes into the valve body 14, and large portion 29A is connected to a small spool rod portion 29B by means of a tapered sealing portion 29C. Tapered portion 29C is arranged to co-operate with a washer 13 mounted in water tight sealing engagement with body 14 by means of O-ring seal 12. Washer 13 forms a valve seating at the edge of its bore in that tapered portion 29B of valve member 29 engages the bore of the washer and the valve is closed. In this connection, it should be mentioned that the area 29' of the end face of portion 29A is greater than the area of the bore in washer 13, and in particular is greater than the area of the bore through which water flows in use.

At its other end, the valve member 29 is sealingly located by means of O-ring seal 15, and is provided with a tooth which is engaged by a socket in a lever arm 18 which is swingable about fulcrum 16.

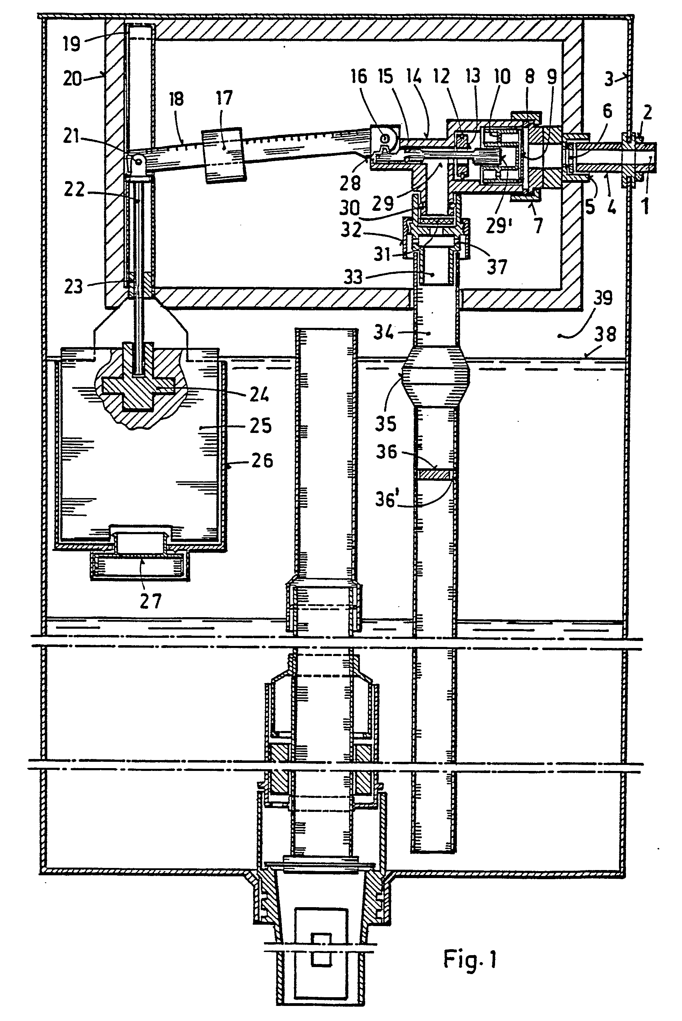

The outlet from the valve body 14 is a downwardly directed sleeve portion on which is sealingly located by means of an O-ring seal 30, a coupling sleeve 33. Pressed on the lower end of the coupling sleeve 33 is a down pipe 34. A noise supressing filter 31 is located between the end of the outlet sleeve portion of body 13 and a central partition in the body 33. Body 33 has radial apertures 37 which are surrounded by a collar 32, and referring to Fig. 1, the down pipe 34 has at a lower level, a diaphragm or partition 36 preventing flow of water through the down tube other than through relatively small drain apertures 36', the purpose of which is to prevent collection of water in the down tube 34 in the event that the cistern is completely drained. On the outside, approximately in the region of the desired water level as indicated by 38, the tube 34 has an outer enlargement in the form of two back to back cones connected by a cylindrical region 35.

In operation, when supply water flows through the valve 14 and into the down tube 34, the level of the water quickly builds up to radial apertures 37 in sleeves 33, from which the water issues. The collar 32 ensures that the water runs down the outer surface of the down tube 34, and the enlargement 35 has the effect of ensuring a better adherence of water to the tube 34, which reduces noise levels.

Inside the cistern 3 is a float casing 26 which is a closed vessel, apart from an open top and apart from a valve 27, the operation of which is controlled by the rising and falling level of water in the cistern as will be explained. A float 25 is received in the casing 26 and is connected by a coupling 24 to a dop link 22 which slides in a bearing 23 in the housing 20. Link 22 is coupled to the lever arm 18 by means of the pivot 21 and a slide guide 19 ensures the linear movement of the link 22. Finally, a weight is slidably carried by arm 18 which is provided with graduations as shown, to enable the accurate and repetitive positioning of the weight 17 in a predetermined position as will be explained when the operation of the unit is explained in the following.

Assume that the valve unit has only just been installed in a cistern tank provided with a suitable float casing 26, and that the valve is closed and no water flows into the tank 3, although the water supply is coupled to coupling 1. The pressure of the supply water will be applied to the face 29' which urges the tapered portion 29C of the valve member sealingly against the washer 13, preventing flow of water into the tube 34. As the cistern will be empty, the float 25 will be initially in a raised installing position, and the weight 17 will be close to the right hand side of the lever arm 18 when viewed in Fig. 1, the float being held raised by virtue of the pressure on the valve member 29.

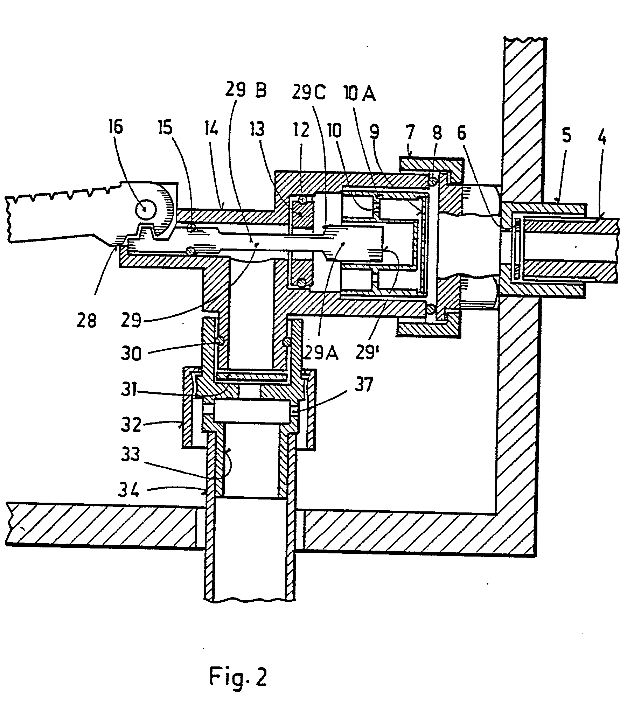

In order to fill the cistern tank 3, the weight 17 is moved along the arm 18 until the moment effect caused by the weight of 17 and arm 18 and components connected thereto overcomes the supply pressure on the valve member 29. When this happens, the lever arm 18 pivots anticlockwise in Fig. 1 moving the valve member 29 against the supply pressure to an open position as shown in Fig. 2. Water now flows freely through the washer 13 and body 14 into down tube 34. As the apertures 36' are relatively small and in fact are smaller than the apertures 37, the water builds up in down pipe 34 until it reaches the level of outlet apertures 37 from whence it issues and by virtue of the collar 32, the water flows down the outside of tube 34 into the cistern tank. As the water does flow down the outside of the tube 34 there is very little noise as there is very little aeration and splashing, which are the major cause of noise.

As the water level rises, so the float valve 27 becomes buoyantly supported by the rising water, and the float is raised upwards until it eventually seals the bottom of the casing 26 which at this time is empty. The water level continues to increase until it reaches the top edge of the casing 26, when water starts to flow into the casing 26 over the top edge. The inflow of water causes the float 25 to commence lifting. The lifting of float 25 means the pivoting clock-wise arm 18, thereby removing the resistance to the tendency of the member 29 to move to the left in Fig. 2 under the pressure of the incoming water, and the member 29 therefore does so move, because the size of the bore in washer 13 is smaller than the pressure face 29' of the valve member, until the tapered portion 29C of the valve member 29 sealingly engages the washer 13 thereby closing the valve and water flow ceases.

The valve remains in this condition until the system is flushed, when the draining of water removes the support for the float 25, and the float therefore falls and arm 18 pivots anticlockwise causing rightwards movement of the valve 29, the unseating of the tapered portion from the washer 13, once more permitting the cycle of refilling to commence.

By virtue of the provision of the holes 37, at a level above the cut-off level 38, siphoning back of the water from the tank 3 into the supply line is prevented, and the provision of the bores 36' ensures that in the event of the tank 3 being completely drained, there will be no collection of water in the tube 34 above the diagphragm 36. Such a collection of water could cause breakage of the tube 34 in the event of freezing of the water taking place.

The level in the example described is chosen so as to leave a space 39 of the order of the height of 4 mm between the water level and the underside of the housing 20.

## Claim

A valve unit for water closets and other installations which is float operated and which comprises a valve including a member (29) which closes a bore in a valve seat to close the valve and prevent flow of water therethrough and is openable by a float control (25) to allow flow of water through the valve, said valve member having an area (29') which is subjected to the pressure of the supply water urging the valve member to the closed position larger than the area of the bore through which the water flows when the valve is open, said unit including a pivot arm (18) from which is suspended the float (25), characterised in that said pivot arm (18) has a weight (17) slidably mounted thereon so that the moment tending to open the valve, can be varied and adjusted during the installation of the unit, to the mean value between the higher and the lower pressure of the supply water in the locality in which the unit is installed, said float (25) being provided with a float casing (26) having a float valve (27) at the base of the casing (26) which closes with the rise in water level preventing any flow of water into the float casing (26) until the water level reaches the top edge of the casing (26), so that the filling of the casing causes lifting of the float (25) and the arm (18) closing the valve.

## Patentanspruch

Ventileinheit für Wasserklosetts und andere Installationen, welche schwimmerbetätigt ist und welche ein Ventil mit einem Verschlußglied (29) aufweist, das eine Bohrung in einem Ventilsitz verschließt, um das Ventil zu schließen und das Durchströmen von Wasser zu verhindern, und das mittels eines steuernden Schwimmers (25) zu öffnen ist, um das Durchströmen von Wasser durch das Ventil zu gestatten, wobei eine dem das Verschlußglied in die Schließstellung tribenden Druck der Wasserversorgung ausgesetzte Fläche (29') des Versclußgliedes größer is als die Fläche der Bohrung, durch die das Wasser bei offenem Ventils wirkende Moment entsprechend dem Mittelwert zwischen dem oberen und dem Schwimmer hängt, dadurch gekennzeichnet, daß an dem Schwenkhebel (18) ein Gewicht (17) verschiebbar angeordnet ist, so daß bei der Installation der Einheit das im Öffnungssinn des Ventils wirkende Moment entsprechend dem Mittelwert zwischen dem oberen und dem unteren Druck der Wasserversorgung am Ort der Anordnung der Einheit verändert und eingestellt werden kann, und daß der Schwimmer (25) in einem am Boden mit einem Schwimmerventil (27) versehenen Schwimmergehäuse (26) untergebracht ist, wobei das Schwimmerventil (27) beim Ansteigen des Wasserspiegels schließt und das Eintreten von Wasser in das Schwimmergehäuse (26) verhindert, bis der Wasserspiegel den oberen Rand des Schwimmergehäuses (26) erreicht, so daß durch Füllung des Schwimmergehäuses das Anheben des Schwimmers (25) und das Schließen des Ventils durch den Schwenkhebel (18) bewirkt wird.

## Revendication

Ensemble à soupape actionné par flotteur pour water-closets et autres installations comprenant une soupape comportant un organe (29) qui ferme un canal dans un siège de soupape pour fermer ainsi la soupape et empêcher l'écoulement d'eau à travers elle et qui peut s'ouvrir par une commande à flotteur (25) pour permettre l'écoulement d'eau à travers la soupape, ledit organe de soupape ayant une face (29'), qui est soumise à la pression de l'eau d'alimentation poussant l'organe de soupape vers la position de fermeture, plus grande que la section de canal à travers lequel s'écoule l'eau quand la soupape est ouverte, ledit ensemble comprenant un bras pivotant (18) auquel est suspendu le flotteur (25), caractérisé en ce que ledit bras pivotant (18) porte un poids (17) monté pour coulisser sur le bras de façon que le couple tendant à ouvrir la soupape puisse être modifié et réglé, pendant l'installation de l'ensemble, pour correspondre à la valeur moyenne entre la pression le plus élevée et la pression la plus faible de l'eau d'alimentation à l'emplacement où est installé l'ensemble, ledit flotteur (25) étant muni d'un boîtier à flotteur (26) qui présente une soupape de flotteur (27) à la base du boîtier pour empêcher l'écoulement d'eau dans le boîtier 26 jusqu'à ce que le niveau d'eau atteigne le bord supérieur du boîtier (26), de façon que le remplissage du boîtier provoque alors la montée du flotteur (25) et du bras (18) fermant la soupape.

Fig. 1

Fig. 2